Europäisches Patentamt

European Patent Office

Office européen des brevets

(19)

(11) Publication number: **0 368 814**
**A1**

(12) # EUROPEAN PATENT APPLICATION

(21) Application number: 89830478.7

(51) Int. Cl.5 **C02F 3/32**

(22) Date of filing: 03.11.89

(30) Priority: 04.11.88 IT 4852388

(43) Date of publication of application:
16.05.90 Bulletin 90/20

(34) Designated Contracting States:
BE CH DE ES FR GB GR LI NL

(71) Applicant: **Giannotti, Maurizio**
**5/A Piazza S.S. Trinità**
**I-01100 Viterbo VT(IT)**

(72) Inventor: **Giannotti, Maurizio**
**5/A Piazza S.S. Trinità**
**I-01100 Viterbo VT(IT)**

(74) Representative: **Di Cerbo, Mario et al**
**Società Italiana Brevetti Piazza Poli, 42**
**I-00187 Roma RM(IT)**

(54) Integrated process of phytodepuration for waste-water.

(57) The integrated process for waste-water depuration according to the invention is based on the combination of phytodepuration in pluriculture (5-9) and of conventional depuration technology (1-4). Phytodepuration is carried out in a basin- natural, artificial or mixed - divided into functional sections, each section being substantially marked by the cultivation of only one species of macrophyte (A-D).

FIG 1

## INTEGRATED PROCESS OF PHYTODEPURATION FOR WASTE-WATER

The present invention refers to an integrated process for waste-water depuration based on the combination of phytodepuration in pluriculture and of conventional depuration technology.

As is known, since the mid-seventies, all over the world research has been going on with the object of treating waste-water by using plants (phytodepuration) and of the eventual re-use of the biomass produced.

The plants used in such research were principally the following:

a) floating macrophytes such as Lemna Minor or Water Lentil and Eicchornia Crassipes or Water Hyacinth, and

b) rooted macrophytes such as, for instance, Tipha and Phragmites.

It must be stressed that all the systems realized were dimensioned for small waste-water flows and were simply based on the principle of phytodepuration in monoculture (utilization of only one species of plant).

In this framework, phytodepuration development and its transfer to the application stage were prevented for the following reasons:

- necessity of vast expanses of land to carry out systems capable of treating waste-water of medium and large flow;

- exorbitant cost of designing and of operating a system using only plants for waste-water treatment;

- exorbitant cost of the treatment directed to the transformation of the biomass produced.

The integrated process for waste-water phytodepuration according to the present invention overcomes all the disavantages above mentioned, offering, at the same time, other advantages that will be explained hereinafter.

The integrated process of waste-water depuration according to the present invention provides the organic combinationof phytodepuration in pluriculture and conventional depuration technology.

In particular, the subject of the present invention is a process of waste-water depuration comprising the combination of the following operational steps:

- screening of all the sewage in flow to remove the total solids;

- distribution of the waters thus obtained into two sections;

- treatment of one of the two sections in conventional depuration systems;

-homogenization and equalization of the above mentioned section treated in a conventional way with the remaining section not treated in the conventional way, in a tank completely covered with floating plants having a development of the root apparatus of less than 30cm below water level;

- biological priming, after the start of the whole depuration process, of the above mentioned sections homogenized and equalized;

- phytodepuration in pluriculture of homogenized and equalized waters in a basin - natural, artificial or mixed - divided into functional sections substantially cultivated in monoculture, the monoculture and the area of each section being chosen in such a way as to provide the necessary depuration, taking into account the dimensions of the natural basin and the chemical-biological nature of the waste-water and the basin; and

- optionally, construction of a filter at the final end of the basin, whose terminal section is substantially devoid of macrophytes.

As regards screening, good depurative results are obtained by removing the solid phases with dimensions greater than 1mm.

As regards the distribution of screened waters, the section treated with the conventional depuration systems preferably ranges from 30 to 50 % in volume of the daily in-coming flow.

The biological priming - subsequent to the start of the whole depuration system - of the homogenized and equalized sections is preferably performed after a period of between one and three weeks. The biological priming is preferably obtained through addition of activated sludge from aerobic depurators. The extent of the addition is preferably at least 20% of the volume of the tank in which the homogenization and the equalization take place.

The biological priming can also be obtained by means of selected bacteria or by taking advantage of the spontaneous growth of the aerobic bacteria present by addition of oxygen.

Homogenization and equalization preferably take place in a tank having the shape of parallel channels whose volume is chosen to allow times of permanence of at least one hour.

This tank, in addition to homogenizing and equalizing waste-water, carries out other important functions. First of all, it regulates the peak delivery and causes all the sedimentable substances contained in the untreated waste-water to decant, in order to obtain a clarification of the effluent. Furthermore, it promotes the establishment of those biological oxydative processes suitable for degrading the decanted organic

2

substance, also regulating in this way the peak of organic load (function of biological fly-wheel).

The tank can theoretically be divided into two functional sections:

- section suitable for mixing the fractions: the fraction conventionally depurated and the fraction of untreated waste-water;

- decantation section represented by subsequent tracts of the tank that behave like a system for the decantation and accumulation of the sedimented organic substance. Here the oxidative processes are activated which are suitable for the degradation of the organic substance and for the slow release of water-soluble compounds of N and P.

All the free surface of the channelled tank is completely covered with floating plants, whose root apparatus does not develop more than 30 cm below the surface of the water (for instance the water-hyacinth).

Inside the tank, degradation processes of the organic substance of oxidative type are set up, thanks to the presence of oxygen dissolved in the effluent discharged from the conventional depuration system. This characteristic allows regulation of the emission of the organic substance into the natural basin. The discharged effluent has an organic load (COD) of at least 30% of the sewage in-flow.

The basin in which phytodepuration occurs is divided into functional sections, each one substantially characterized by the cultivation of only one species of macrophyte.

In a preferred embodiment the functional sections are three. In the first functional section, phytodepuration is obtained through treatment with rooted plants (for instance Tipha, Phragmites etc.) that completely cover the section, the length of which is selected so as to reduce the organic load to about 40%.

In the second functional section, phytodepuration is obtained through a treatment with floating macrophytes, optionally of small dimensions (for instance Lemna Minor) that do not completely cover the section, leaving areas free from floating plants so as to permit the growth of unicellular algae to reoxygenate the water and to further reduce dissolved compounds of N and P. In this section the floating macrophytes, optionally of small dimensions, can be enclosed in particular floating structures constituted by a flexible buttwelded pipe (cell). Each cell can extend from one bank to the other of the natural basin and is preferably square in shape. The flanked cells can give rise to continuous segments. Between adjacent segments there are areas where the water surface is left completely free from floating plants. This section ends when concentrations of COD, BOD5, N-tot and P-tot are reduced on average to 30-40% of the concentrations at the starting point of the same section.

A third functional section is formed by a monoculture of floating macrophytes that completely cover the section.

In said section all those final processes for refining of the effluent take place in order to confer it with all the chemical-biological characteristics required. At the end of this section the effluent is completely depurated of all the organic and inorganic compounds that cause pollution. If the basin passes through villages or public parks or, generally, near environments in which man lives, the presence of this section makes it possible to avoid proliferation of insect larvae (for instance mosquitos) and the spread of unpleasant smells.

The last section left completely devoid of macrophytes then follows. Here all those biological processes typical of the basin are accentuated. This last control section also acts as a biological lung, absorbing possible peaks of organic load which may have escaped the previous sections. It ends with a dam of sand or stones of varying section. The purpose of the dam is to further filter the treated effluent.

The total volume of the basin must be such as to allow a permanence time of the effluent of 10 - 100 hours, preferably 48 - 72 hours. This feature imparts to the whole structure characteristics which are intermediate between the classic depuration system and the lagoon system.

In addition to those already mentioned, the main advantages of the integrated process for waste-water phytodepuration are the following:

- utilization of the pre-existent depuration structures;

- utilization of natural basins instead of purpose-built artificial basins;

- land reclamation and environmental recovery of the basin otherwise exposed to an excessive and polluting organic load;

- harmonic blending with the surrounding environment;

- total absence of unpleasant smells or unpleasant colours of the water present in the basin;

- total absence of troublesome insects;

- biological recovery of the basin and consequent restoration of its typical and peculiar habitat;

- land reclamation of coasts or rivers or lakes into which the treated basin can flow;

- limited cost as regards the realization and the operation of the system;

- possibility of inserting such a system in public contracts for water treatment and territory management;

- production of a biomass that can be re-used as a human or animal alimentary product, as it is, or after preliminary transformation.

The process, object of the present invention, has so far been described in a general manner. With the help of the following example a detailed description of one of its embodiments will now be given to better understand its purposes, characteristics and advantages in relation to a specific application.

EXAMPLE

REALIZATION OF A SEASONAL TREATMENT THAT MAKES UP FOR THE STRONG INCREASE OF ORGANIC LOAD DUE TO THE EXCESS OF SUMMER PRESENCES

A village was taken into account which is a seaside resort and undergoes considerable variations in tourist presences during the summer months: from 3,000/3,500 people during the winter months the population becomes 20,000/25,000 during the summer period.

The pre-existent depuration systems have a total potentiality of 8,000 inhabitants/equivalent and are therefore decidedly underdimensioned during the summer period.

The sewage out-flow partially treated in a channel near the village determined, in the ditch and on the coast surrounding the mouth of the same, a highly compromised situation, with strong negative reflections at a touristic level, as well as the non-fulfilment of current legislative regulations. Therefore, it was decided to solve the problem by completing the depuration, during the summer period, with a phytodepuration treatment.

Parameters assumed as the basis of the calculation system of phytodepuration plant (d = day):

Existing systems:
    a) percolating system : 5,000 inhabitants/equivalent
    b) activated sludge : 3,000 inhabitants/equivalent Inhabitants : 25,000

Maximum load : 5,000 m3/d

Max. load period : months of July - August

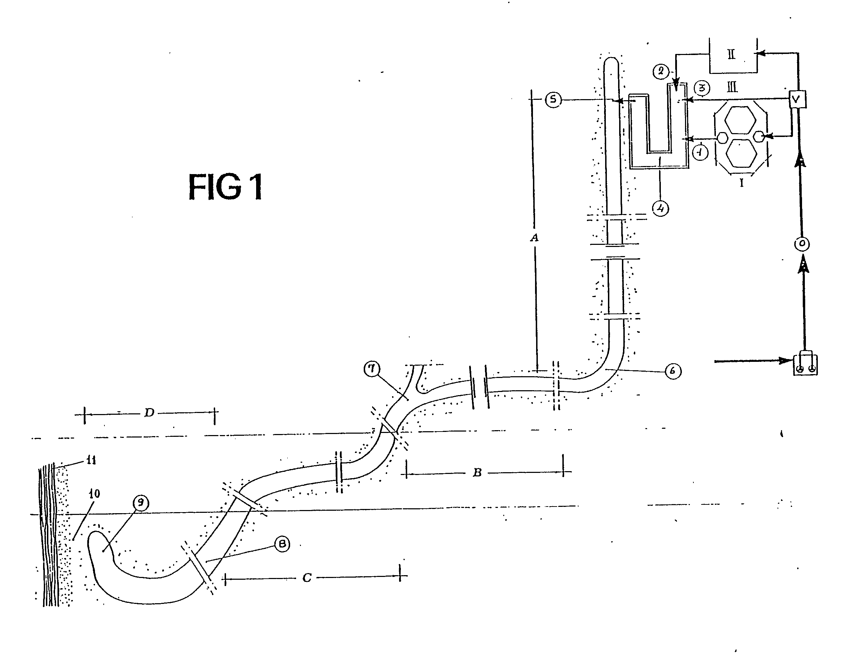

The phytodepuration system was carried out taking the greatest possible advantage of the natural resources available and respecting exosting structures. As shown in the general scheme of the only figure enclosed (figure 1), the village sewers are pumped in only one zone where depurators are installed. On arrival, sewage first undergoes a fine screening (V) to eliminate coarse solids which are collected in roadside garbage collecting bins.

From the screening sewage is proportionally divided into:
- system for 3,000 inhabitants/equivalent (I);
- system for 5,000 inhabitants/equivalent (II);
- by-pass that collects the surplus sewage (III).

The effluents discharged from the two systems and from the by-pass 1, 2 and 3 are gathered in a homogenization and equalization tank. The above mentioned tank accomplishes at the same time the functions of collector of the three effluents, of homogenizor of the effluents and acts as initial tank for water hyacinth cultivation with which it is completely covered. From the tank the effluent is discharged into the channel (point 5).

The channel which crosses the village was divided into four functional sections: A, B, C, D, each one with a different population of macrophytes.

Section A is about 600 m long and 6 m wide. The average depth of the water is 40 cm. It is completely covered with rooted macrophytes (Tipha). Tipha horizontally forms a true biological filter, contributing to the degradation of the organic substance both directly and through the activated biological films that install themselves in the submerged part of the plants. It also contributes to the absorption of the inorganic substances present in the slime. The cultivation of rooted Tipha plants has a total area of 3,600 m$^2$ (from point 5 to point 6).

Section B is about 400 m long and 6 m wide. Average water depth is 1m. It presents a cultivation of floating macrophytes (Lemna Minor). In the above mentioned section there is in particular the absorption by the plants of nitrogen and phosphorus dissolved in the water. Lemna covers the surface of the section considered for about 200 m: 100 in the initial tract (point 6) and 100 in the final tract (point 7) with a total extension of 1,200 m$^2$ in which Lemna covers the channel with an uniform layer about 1 cm thick. The intermediate tract of the remaining 200 m was deliberately left free from Lemna to permit development of algae and thus water re-oxygenation.

Section C is 250 m long and on average 13,5 m wide. Average depth of the water is 1,5 m. This section is covered like a carpet by floating macrophytes (water hyacinth). Water hyacinth is contained within floating cells in green flower-beds that cover the whole surface of the channel like a carpet.

Section D is 265 m long and 3 m wide. Average depth of the water is 2 m. The section is completely free from macrophytes. The section in question is the last one before the sea. The stretch of water was left completely free from macrophytes to accentuate oxygenation and to permit the life of ichthyic fauna present (mullet and eels). The water of the channel does not have a direct mouth, but flows out through a natural sand dam 10 created by tides, into the sea 11. This creates in the basin the conditions for a typical channel habitat.

The equivalent inhabitants served are 25,000.

The effluent load is 600 m³ d during the winter period and 5,000 m³/d at the peak of the summer period.

Fluctuation in the population during the period June/September and the fluctuation of the effluent treated are as fillows:

| - 15-30 June = | 7,500 inhab. = | 1,500m³ d = | 22,500 m³ 15d |
| - 01-15 July = | 10,000 inhab. = | 2,000m³ d = | 30,000 m³ 15d |
| - 15-31 July = | 17,500 inhab. = | 3,500m³ d = | 52,500 m³ 15d |
| - 01-31 Aug. = | 25,000 inhab. = | 5,000m³ d = | 155,000 m³ 31d |
| - 01-15 Sept. = | 17,500 inhab. = | 2,500m³/d = | 37,500 m³ 15d |
| - 15-30 Sept. = | 7,500 inhab. = | 1,500m³/d = | 22,500 m³ 15d |
| Total waste-water treated during summer period = 320,000 m³. | | | |

The system was constantly under control, both as regards the chemical analysis of the quality of waters and the condition of development of macrophytes. The analysis of depuration efficiency was made on the basis of the flows estimated with a flow meter installed in the cess-pit (0). This made it possible to obtain detailed information on the system efficiency. Reduction data are calculated on various parameters: COD (Chemical Oxygen Demand), N-tot (Total Nitrogen), P-PO4 (Phosphorus as phosphate), BOD5 (Biological Oxygen Demand in the standard 5-days test). Values obtained are shown in tables 1, 2, 3 and 4.

The above solution fully answered the necessities of the finishing treatment of waste-water coming from the decidedly underdimensioned pre-existent systems. The particular situation, characterized by a progressive increase in flow during the tourist season, fully exploited the function of the phytodepurative process. This solution has moreover fully answered the demands of an harmonic blending in with the surrounding landscape. Neither development of mosquitos nor any protest from the tourists resident near the channel occurred. Moreover, analysis carried out in the portion of the sea in the vicinity of the channel (during the whole summer period) gave evidence of bacterial charges such as to permit bathing without any problem.

**Claims**

1. An integrated process for waste-water depuration characterized by the combination of phytodepuration in pluriculture and conventional depuration technology.

2. The integrated process for waste-water depuration according to claim 1, comprising the combination of the following operative steps:
- screening of all the sewage in flow to remove coarse solids;
- distribution of waste-water thus obtained into two sections;
- treatment of one section of water devoid of coarse solids with conventional depuration systems;
- homogenization and equalization of the above mentioned depurated section in a conventional way, in a tank completely covered with floating plants having a development of the root apparatus of less than 30cm below water level;
- biological priming, after the start of the whole depuration process, of the above mentioned homogenized and equalized sections;
- phytodepuration in pluriculture of homogenized and equalized waters in a basin, natural, artificial or mixed, divided into functional sections substantially cultivated in monoculture, said monoculture and the area of each section being chosen in such a way as to ensure the necessary depuration, taking into account the dimensions of the basin and the chemical-biological nature of the waste-water and the above mentioned basin; and
- optionally, construction of a filter at the final end of the basin, whose terminal section is substantially devoid of macrophytes.

3. The integrated process of depuration according to claim 2, in which, during the screening, solids of dimensions superior to 1mm are removed.

4. The integrated process of depuration according to claims 2 or 3, in which the fraction treated with conventional systems of depuration ranges from 30 to 50% in volume of the daily in-coming charge.

5. The integrated process of phytodepuration according to the preceding claims, in which the biological priming, in the tank, of the homogenized and equalized fractions is performed after a period that ranges from 1 to 3 weeks.

6. The integrated process of depuration according to claim 5, in which the biological priming is obtained through addition of sludge from aerobic depurators or through selected bacteria or taking advantage of the spontaneous growth of aerobic bacteria present by addition of oxygen.

7. The integrated process of depuration according to claim 6, in which the extent of sludge addition from aerobic depurators is at least 20% of the volume of the tank in which homogenization and equalization take place.

8. The integrated process of depuration according to the preceding claims, in which homogenization and equalization take place in a tank having the form of parallel channels, whose volume allows times of permanence of at least one hour.

9. The integrated process of depuration according to the preceding claims, in which the basin wherein phytodepuration takes place is divided into functional sections, each one characterized by the cultivation of only one species of macrophyte.

10. The integrated process of depuration according to claim 9, in which the functional sections are three:
- in the first functional section, phytodepuration is obtained through a treatment with rooted plants that completely cover the section, whose length is so selected as to reduce the original charge to about 40%;
- in the second functional section, phytodepuration is obtained through a treatment with floating macrophytes, optionally of small dimensions, which do not cover the section completely, leaving areas free from floating plants;
- the third section is a monoculture of floating macrophytes that completely cover the section, the last section of the basin being left completely devoid of macrophytes and optionally terminating in a dam of sand or stones of varying section.

11. The integrated process of depuration according to claim 10, in which the rooted plant used in the first functional section is Tipha and/or Phragmites.

12. The integrated process of waste-water depuration according to claims 10 or 11, in which the floating macrophyte of small dimensions used in the second functional section is Lemna Minor.

13. The integrated process of waste-water depuration according to claims from 10 to 12, in which the floating macrophyte used is water hyacinth.

14. The integrated process of depuration according to claims from 10 to 13, in which the floating plants in the second and/or in the third functional section are enclosed, partially or totally, within floating structures.

15. The integrated process of waste-water depuration according to claim 14, in which each floating structure is made of a flexible buttwelded pipe.

16. The integrated process of waste-water depuration according to previous claims, in which the total volume of the basin is such as to permit a time of permanence of the effluent of between 10 and 100 hours.

17. The integrated process of waste-water depuration according to claim 16, in which the total volume of the basin is such as to permit a time of permanence of the effluent of between 48 and 72 hours.

18. The integrated process of waste-water depuration according to any one of the preceding claims, in which the biomass produced is re-used again, untreated or after preliminary transformation, for human or animal nourishment.

6

FIG 1

EP 0 368 814 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 110, no. 16, 17th April 1989, page 356, abstract no. 140806g; S. MALCEVSCHI et al.: "Experience with artificial filtering ecosystems for microbiological pollution removal", & ING. AMBIENTALE 1988, 17(9), 478-85 | 1 | C 02 F 3/32 |
| | --- | | |
| A | IDEM | 12 | |
| | --- | | |
| X | DE-A-3 423 226 (H. KRAFT) * Titelseite, Zusammenfassung; Seite 7, "Bepflanzung"; Seite 1, Anspruch 1 * | 1 | |
| A | | 2,10,11 | |
| | --- | | |
| X | CHEMICAL ABSTRACTS, vol. 97, no. 4, 26th August 1982, page 274, abstract no. 28069f; TRIDECH,SAKSIT et al.: "Tertiary wastewater treatment by the application of vascular aquatic plants", & CHEM. WATER REUSE 1981, 2, 521-39 | 1 | |
| | --- | | TECHNICAL FIELDS SEARCHED (Int. Cl.5) |
| A | IDEM | 11-13 | C 02 F |
| | --- | | |
| A | US-A-4 169 050 (SOLAR AQUASYSTEMS) * Column 5, lines 8-22; column 6, line 66 - column 7, line 5; column 8, line 32 - column 9, line 10 * | 2,10,12 -14 | |
| | ---             -/- | | |

The present search report has been drawn up for all claims

| Place of search | Date of completion of the search | Examiner |
|---|---|---|
| THE HAGUE | 12-02-1990 | TEPLY J. |

European Patent
Office

**EUROPEAN SEARCH REPORT**

Application Number

EP 89 83 0478

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 98, no. 4, 24th January 1983, page 300, abstract no. 21696; M. RADOUX et al.: "The potential use of Phragmites australis (Cav.) Trin ex Steud., Typha latifolia and Carex acuta L. for the treatment of wastewaters: an ecological and experimental approach.", & TRIB. CEBEDEAU 1982, 35(465,466), 325-40 --- | 1,11 | |
| A | CHEMICAL ABSTRACTS, vol. 92, no. 14, 4th July 1980, page 336, abstract no. 116159n; J.F. MARTIN et al.: "Lagooning in tertiary treatment. Experimentation with higher aquatic plants. Cress and duckweed. Part 2.", & TECH EAU ASSAINISSEMENT 1978, 378,9 19-28 ----- | 1,18 | |

TECHNICAL FIELDS
SEARCHED (Int. Cl.5)

The present search report has been drawn up for all claims

| Place of search | Date of completion of the search | Examiner |
|---|---|---|
| THE HAGUE | 12-02-1990 | TEPLY J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P0401)